# EUROPÄISCHE PATENTANMELDUNG

(11) **EP 1 837 158 A1**
(43) Veröffentlichungstag der Anmeldung: **26.09.2007**
(21) Anmeldenummer: 07101222.3
(22) Anmeldetag: 26.01.2007
(51) Int. Cl.: B29C 53/08, B29D 23/20, B29C 53/82

(54) **Dorn zum Herstellen von Krümmerschläuchen**

(30) Priorität: 15.03.2006 DE 102006012272
(71) Anmelder: ContiTech Schlauch GmbH, 30165 Hannover (DE)
(72) Erfinder: Riedewald, Frank, 37154 Northeim (DE); Statz, Andreas, 37154 Northeim (DE); Wittler, Axel, 37181 Hardegsen 1 (DE); Wienert, Torsten, 37191 Katlenburg (DE); Heiligenstadt, Stefan, 37191 Katlenburg (DE); Krzykowski, Alfred, 37186 Moringen (DE); Hausmann, Mike, 37589 Kalefeld (DE); Magnus, Thomas, 37176 Nörten-Hardenberg (DE); Ellies, Rolf, 37154 Northeim (DE); Issmer, Dirk, 37181 Hardegsen (DE); Christoph, Jörg, 38685 Langelsheim (DE)
(74) Vertreter: Finger, Karsten

(57) **Zusammenfassung**

Die Erfindung betrifft einen Dorn zum Herstellen von Krümmerschläuchen aus elastomerem Material, wobei der Dorn an den Enden axial zum Dorn bewegliche, hülsenförmige Muffen mit auf der Innenseite angeordneten Anschlägen aufweist, die Muffen gegen Relativbewegungen zum Dorn lösbar befestigt sind und die Befestigung der Muffen an mindestens einem Ende des Domes aus einer an einem Anschlag des Doms anliegenden und in einer Ringnut des Domes eingreifenden Verriegelungsnase besteht. Aufgabe der Erfindung ist, einen Dorn der eingangs geschilderten Art zu schaffen, der ein fehlerfreies Aufschieben des Rohlings ohne Lufteinschlüsse bei gleichzeitig kurzer Bauweise des Domes ermöglicht.

Zur Lösung dieser Aufgabe weist mindestens eine Muffe in der axialen Stirnfläche ihres Anschlages mündende Entlüftungsbohrungen auf.

## Beschreibung

Die Erfindung betrifft einen Dorn zum Herstellen von Krümmerschläuchen aus elastomerem Material ohne oder mit Verstärkungseinlage, wobei der Dorn an den Enden axial zum Dorn bewegliche, hülsenförmige Muffen mit auf der Innenseite angeordneten Anschlägen aufweist, die Muffen gegen Relativbewegungen zum Dorn lösbar befestigt sind und die Befestigung der Muffen an mindestens einem Ende des Dornes aus einer an einem Anschlag des Dorns anliegenden und in einer Ringnut des Dornes eingreifenden Verriegelungsnase besteht.

Derartige Dorne sind beispielsweise aus der DE 27 37 277 bekannt. Bei dieser Lösung besteht jedoch die Gefahr, dass beim Einschieben des Schlauchrohlings in die Muffe Luft in dem Ringspalt zwischen Muffe und Dorn eingeschlossen wird, die durch die engen Spalte der Führung nicht schnell genug entweicht, dadurch der Rohling nicht bis zum Anschlag eingeschoben wird und damit eine nicht korrekte Länge erhält.

Bei üblichen Dornen verläuft der Entlüftungsweg häufig erst axial durch ein entsprechend großes Spiel zwischen Dorn und Hülse. Die entweichende Luft gelangt dann in einen Raum, der meist als umlaufende Nut in Dorn oder Hülse ausgeführt wird und entweicht dann durch radiale Bohrungen in der Muffe. Die Dorne und Kappen sind deshalb in Ihrer Bauart wesentlich länger, da die Entlüftung nicht direkt geschieht.

Der Erfindung liegt daher die Aufgabe zugrunde, einen Dorn der eingangs geschilderten Art zu schaffen, der ein fehlerfreies Aufschieben des Rohlings ohne Lufteinschlüsse bei gleichzeitig kurzer Bauweise des Dornes ermöglicht.

Diese Aufgabe wird dadurch gelöst, dass mindestens eine Muffe in der axialen Stirnfläche ihres Anschlages mündende Entlüftungsbohrungen aufweist.

In einer Weiterbildung der Erfindung verlaufen die Bohrungen ausgehend von der axialen Stirnfläche des Anschlages in einer vorbestimmten Länge in axialer Richtung und nach dieser vorbestimmten Länge in einem Winkel von 45° bis 90° zur Längsachse der Muffe.

Diese Anordnung der Entlüftungsbohrungen hat den Vorteil, dass beim Einschieben des Rohlings die im Ringspalt zwischen Muffe und Dorn befindliche Luft ungehindert bis zum Anschlagen des Rohlings an den Anschlag ausströmen kann.

Im Gegensatz zu radialen Bohrungen werden die erfindungsgemäßen axial mündenden Bohrungen nicht vorzeitig vom Rohling verdeckt.

Das bei der Vulkanisation in die erfindungsgemäßen axial mündenden Bohrungen eindringende Material lässt sich nach Fertigstellung des Schlauches relativ einfach entfernen, da an die Oberfläche der Stirnfläche des Schlauches keine besonderen Oberflächenanforderungen gestellt werden.

Die Anordnung der Bohrungen im Winkel von 45° bis 90° nach einer vorbestimmten Länge in axialer Richtung hat den Vorteil, dass keine langen schwierig herzustellenden axialen Bohrungen erforderlich sind. Die Führung der Muffe auf dem Dorn wird nicht nennenswert geschwächt.

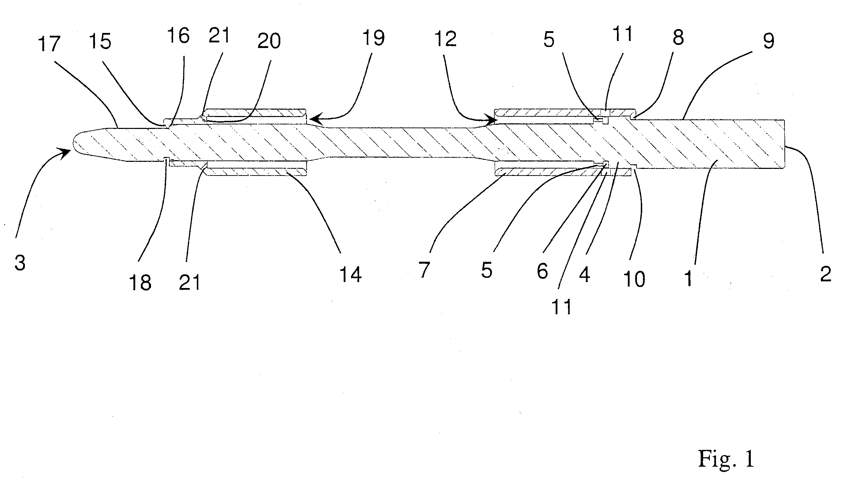

Anhand der Zeichnung wird nachstehend ein Beispiel der Erfindung näher erläutert. Die Figur zeigt einen Dorn 1 zur Herstellung eines Schlauches. An seinem ersten Ende 2 ist der Dorn 1 an einem hier nicht gezeigten Vulkanisationsgestell angebracht. Am gegenüberliegenden Ende 3 weist der Dorn 1 eine konische Verjüngung auf, die das Aufschieben eines hier nicht gezeigten Schlauchrohlings erleichtert.

Vom ersten Ende 2 der Dornes 1 beabstandet, weist der Dorn 1 einen umlaufenden Bund 4 auf, der axiale Bohrungen 5 und eine radiale Ringnut 6 aufweist, wobei die axialen Bohrungen 5 in die radiale Ringnut 6 münden.

Auf den Dorn 1 ist eine Muffe 7 gesteckt, die mit einem radial nach Innen weisenden Vorsprung 8 gegen den Bund 4 des Dornes 1 anschlägt. Der Vorsprung 8 gleitet während des Aufschiebens über eine Abflachung 9 des Dornes 1. Durch Verdrehen der Muffe 7 greift der Vorsprung 8 in eine Ringnut 10 des Dornes 1 ein und ist damit axial auf dem Dorn 1 festgelegt.

Axiale Bohrungen 11 der Muffe 7 korrespondieren in dieser Position der Muffe 7 mit der Ringnut 6 des Bundes 4. Die Muffe 7 bildet mit dem Dorn 1 einen Ringspalt 12, in den der nicht gezeigte Schlauchrohling einschiebbar ist. Durch die Bohrungen 5, die Ringnut 6 und die Bohrungen 11 entweicht dabei die im Ringspalt 12 befindliche Luft.

Eine weitere Muffe 14 ist vom Ende 3 aus auf den Dorn 1 aufgeschoben. Die Muffe 14 weist ebenfalls einen radial nach innen ragenden Vorsprung 15 auf, der gegen einen Absatz 16 des Dornes 1 angeschlagen ist. Der Vorsprung 15 gleitet während des Aufschiebens ebenfalls über eine Abflachung 17 des Dornes 1. Durch Verdrehen der Muffe 14 greift der Vorsprung 15 in eine weitere Ringnut 18 des Dornes 1 und ist damit axial gegen den Dorn 1 festgelegt. Die Muffe 14 bildet mit dem Dorn 1 einen zweiten Ringspalt 19, in dem der aufgeschobene nicht gezeigte Schlauchrohling zu liegen kommt. Die Muffe 14 weist im Inneren einen Anschlag 20 auf, dessen Stirnfläche dem nicht gezeigten Schlauchrohling zugewandt ist und der Längenkalibration des Schlauchrohlings dient. Weiter weist die Muffe 14 Entlüftungsbohrungen 21 auf, die auf den Umfang der Muffe 14 verteilt sind und in einem Winkel von 45° zur Längsachse der Muffe angeordnet sind. Die Bohrungen 21 münden in der Stirnfläche des Anschlages 20. Durch die Bohrungen kann die im Ringspalt 19 vorhandene Luft während des Aufschiebens der Muffe 14 vollständig entweichen, da sie erst bei vollständig aufgeschobener Muffe 14 durch den nicht gezeigten Schlauchrohling verdeckt werden.

### Bezugszeichenliste

(Teil der Beschreibung)
1 Dom
2 erstes Ende des Dornes 1
3 zweites Ende des Dornes 1
4 Bund des Dornes 1
5 axiale Bohrungen des Bundes 4
6 radiale Ringnut des Bundes 4
7 Muffe
8 Vorsprung der Muffe 7
9 Abflachung des Dornes 1
10 Ringnut des Dornes 1
11 Axiale Bohrungen der Muffe 7
12 Ringspalt zwischen Muffe 7 und Dorn
14 Muffe
15 Vorsprung der Muffe 14
16 Absatz des Dornes 1
17 Abflachung des Dornes 1
18 Ringnut des Dornes 1
19 Ringspalt zwischen Muffe 14 und Dorn 1
20 Anschlag der Muffe 14
21 Entlüftungsbohrungen der Muffe 14

## Patentansprüche

1. Dorn (1) zum Herstellen von Krümmerschläuchen aus elastomerem Material ohne oder mit Verstärkungseinlage, wobei der Dorn (1) an den Enden (2, 3) axial zum Dorn (1) bewegliche, hülsenförmige Muffen (7, 14) mit auf der Innenseite angeordneten Anschlägen (20) aufweist, die Muffen (7, 14) gegen Relativbewegungen zum Dorn (1) lösbar befestigt sind und die Befestigung der Muffen (7, 14) an mindestens einem Ende (2, 3) des Dornes (1) aus einer an einem Anschlag (16) des Dorns (1) anliegenden und in einer Ringnut (18) des Dornes (1) eingreifenden Verriegelungsnase (15) besteht, **dadurch gekennzeichnet, dass** mindestens eine Muffe (7, 14) in der axialen Stirnfläche ihres Anschlages (20) mündende Entlüftungsbohrungen (21) aufweist.

2. Dorn nach Anspruch 1, **dadurch gekennzeichnet, dass** die Bohrungen (21) ausgehend von der axialen Stirnfläche des Anschlages (20) in einer vorbestimmten Länge in axialer Richtung und nach dieser vorbestimmten Länge in einem Winkel von 45° bis 90° zur Längsachse der Muffe (7, 14) verlaufen.
